# FASCICULE DE BREVET EUROPEEN

(11) **EP 0 435 770 B1**
(45) Date de publication et mention de la délivrance du brevet: **15.09.1993**
(21) Numéro de dépôt: 90403776.9
(22) Date de dépôt: 27.12.1990
(51) Int. Cl.: F02C 7/14, F02C 7/18, F01D 5/08

(54) **Turbomachine refroidie par air et procédé de refroidissement de cette turbomachine**
Luftgekühlte Turbomaschine und Kühlprozess für diese Turbomaschine
Aircooled turbomachine and method for cooling of this turbo machine

(30) Priorité: 28.12.1989 FR 8917298
(43) Date de publication de la demande: 03.07.1991
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Mazeaud, Georges, F-91330 Yerres (FR); Mirville, François Jean-Pierre, F-77850 Hericy (FR); Saillot, Patrick William Roger, F-77000 La Rochette (FR)
(74) Mandataire: Moinat, François

(56) Documents cités:
- FR-A- 1 097 374
- FR-A- 2 065 179
- GB-A- 1 348 127
- GB-A- 2 084 654
- US-A- 2 618 120
- US-A- 2 783 965
- US-A- 4 901 520

## Description

La présente invention concerne les turbines à gaz et elle se rapporte plus particulièrement à la ventilation des turbines à haute température dans les turbomachines aéronautiques.

Les performances des turbomachines aéronautiques résultent directement de la température maximale, soutenable en utilisation continue, des parties chaudes de ces turbomachines, principalement des composants de la turbine à haute pression. Les progrès techniques de refroidissement des éléments de la turbomachine qui se trouvent dans le trajet d'écoulement des gaz chauds et, notamment, les aubes fixes et mobiles de la turbine à haute pression, composants les plus sollicités en température, permettent une augmentation de la température en entrée de la turbine.

Il est de pratique courante pour refroidir les aubes de la turbine à haute pression, distributeurs et aubes mobiles, de prélever de l'air de refroidissement au compresseur à haute pression et de l'acheminer vers les aubes de la tubrine. Pour permettre une accélération de l'air de refroidissement, des accélérateurs sont disposés au niveau du prélèvement. D'une façon générale, ce prélèvement au compresseur à haute pression est réalisé de manière centripète au travers du disque ou du tambour du compresseur à haute pression, disque dans lequel est placé l'accélérateur, puis l'air est acheminé le long de l'arbre de liaison reliant la turbine au compresseur à haute pression, et dirigé vers les aubages fixes et mobiles de la turbine de manière centrifuge.

Les demandes de brevets français FR-A-2 552 164, FR-A-2 609 500 et FR-A-2 614 654 se rapportent à des accélérateurs d'air de refroidissement qui sont centripètes et placés dans un disque du compresseur à haute pression et la demande de brevet anglais N° 2 189 845 décrit un dispositif pour acheminer l'air de refroidissement à une turbine, dispositif qui comporte un diffuseur centrifuge associé à un étage du rotor de ladite turbine. Voir aussi le document FR-A-1 097 374.

Cependant dans les turbomachines de la prochaine génération, turboréacteur-statoréacteur aérobie ou turboréacteur futur, les dispositifs de refroidissement actuellement utilisés seront nettement insuffisants.

En effet, la température élevée de l'air dans le compresseur à haute pression de ces turbomachines ne permettra pas l'utilisation directe de cet air comme fluide de refroidissement; il sera nécessaire de refroidir cet air dans un échangeur de chaleur avant de l'acheminer vers la turbine à haute pression.

La demande de brevet français FR-A-2 400 618 concerne un procédé pour ventiler la turbine à haute pression d'une turbomachine qui consiste à refroidir l'air de refroidissement, prélevé dans la chambre de combustion, dans un échangeur d'air situé à l'extérieur de la turbomachine dans le canal annulaire où circule l'air de dilution de la soufflante. L'air refroidi passe ensuite dans les montants de support arrière du compresseur à haute pression puis dans un distributeur détendeur. La perte de charge occasionnée par le cheminement de l'air dans le circuit de refroidissement ne permettra pas une circulation suffisamment rapide de l'air dans les aubages de la turbine à haute pression de la turbomachine future.

Le but de la présente invention est de pallier ces inconvénients et de proposer une amélioration au procédé précédent qui permette un refroidissement maximum des aubes fixes ou mobiles de la turbine à haute pression, ce qui autorise une augmentation de la température à l'entrée de ladite turbine et par le fait même améliore le rendement de la turbomachine.

Le but est atteint selon l'invention par le fait que le procédé pour refroidir la turbine à haute pression d'une turbomachine comportant d'amont en aval un compresseur à haute pression servant à comprimer de l'air, une chambre de combustion et une turbine à haute pression, procédé selon lequel on prélève une partie de l'air comprimé par le compresseur à haute pression, on refroidit cet air prélevé par des moyens de refroidissement et on envoie l'air refroidi à la turbine, est caractérisé en ce que l'on recomprime l'air refroidi par les moyens de refroidissement avant de l'envoyer à la turbine.

La présente invention concerne également une turbomachine du type comportant
un compresseur à haute pression servant à comprimer l'air circulant dans une veine annulaire d'amont en aval dudit compresseur
une chambre de combustion annulaire disposée en aval dudit compresseur, délimitée du côté de l'axe de ladite turbomachine par une paroi interne, recevant la plus grande partie de l'air comprimé par ledit compresseur et destinée à produire des gaz de combustion à haute température par combustion d'un combustible,
une turbine à haute pression disposée en aval de la chambre de combustion et dans laquelle les gaz de combustion issus de la chambre de combustion se détendent,
un arbre d'entraînement reliant la partie rotative de ladite turbine à la partie rotative dudit compresseur et s'étendant dans l'axe de ladite turbomachine, et
un dispositif de refroidissement par air de ladite turbine comprenant
des moyens pour prélever une quantité d'air, dite air de refroidissement, dans ladite veine d'air au voisinage dudit compresseur,
des moyens pour refroidir ledit air de refroidissement prélevé, et
des moyens pour envoyer ledit air de refroidissement refroidi à ladite turbine,
caractérisée en ce que les moyens pour envoyer ledit air refroidi à la turbine comporte un compresseur axialo-centrifuge disposé entre le compresseur haute pression et ladite turbine dans l'espace annulaire délimité par la paroi interne de la chambre de combustion et l'arbre d'entraînement, ledit compresseur axialo-centrifuge étant coaxial à ladite turbine et entraîné par celle-ci pour recomprimer l'air de refroidissement refroidi par lesdits moyens de refroidissement et à le centrifuger vers les aubes de ladite turbine et comprenant un carter externe fixe relié à la paroi interne de la chambre de combustion et un rotor mobile relié à l'arbre d'entraînement du compresseur à haute pression.

Avantageusement, le compresseur axialo-centrifuge comporte d'amont en aval une pluralité d'étages axiaux et une roue centrifuge.

Avantageusement, le rotor mobile constitue une partie de l'arbre d'entraînement du compresseur à haute pression.

Avantageusement le rotor mobile est fixé, en amont, à l'extrémité arrière de l'arbre d'entraînement et, en aval, à la partie rotative de ladite turbine.

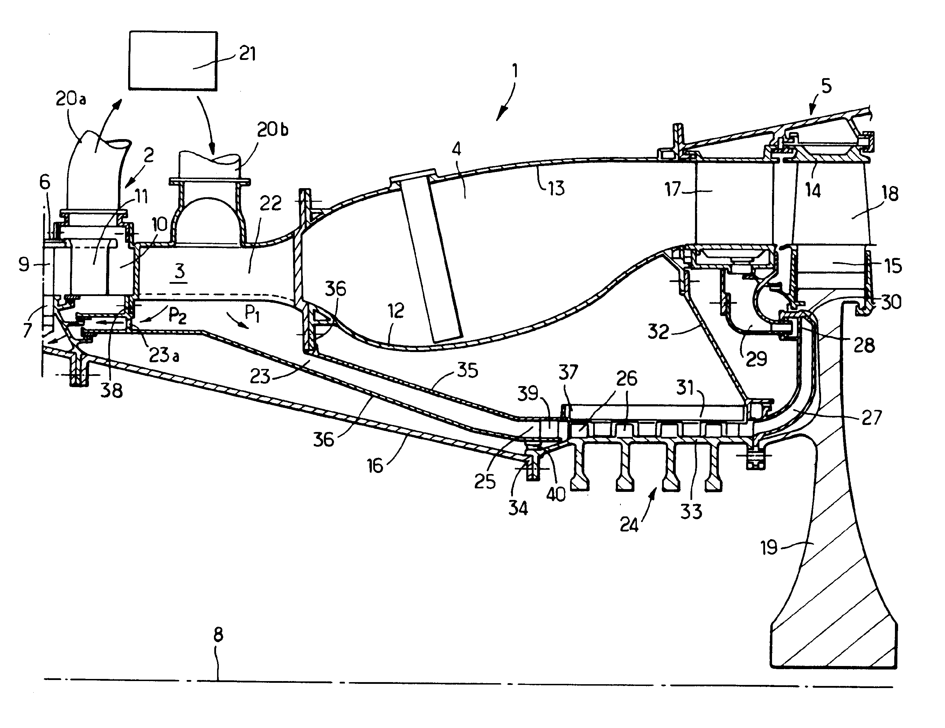

D'autres avantages et caractéristiques de l'invention apparaîtront à la lecture de la description suivante faite à titre d'exemple non limitatif en référence au dessin annexé dans lequel la figure unique montre une vue en coupe simplifiée d'une turbomachine selon la présente invention.

La turbomachine aéronautique 1 représentée sur le dessin comporte d'amont en aval: un compresseur à haute pression 2 dont seul le dernier étage est représenté sur le dessin, un carter diffuseur 3, une chambre de combustion 4 et une turbine à haute pression 5.

Le compresseur à haute pression 2 comprend une partie externe fixe 6 et une partie interne mobile 7 tournant autour de l'axe 8 de la turbomachine et comportant une pluralité d'aubes radiales 9 destinées à comprimer l'air circulant dans une veine d'air annulaire 10. L'air comprimé pénètre dans la chambre de combustion 4 après avoir été redressé par des aubes fixes 11 et être passé à travers le carter diffuseur 3. La chambre de combustion 4 a une forme annulaire et est délimitée du côté de l'axe 8 de la turbomachine par une paroi interne 12 et du côté extérieur par une paroi externe 13.

Un combustible est mélangé dans la chambre de combustion 4 à l'air comprimé issu du compresseur à haute pression 2 et est brûlé pour produire des gaz de combustion à énergie élevée qui entraînent la turbine à haute pression 5. Celle-ci comporte une partie externe fixe 14 et une partie interne rotative 15 reliée à la partie rotative 7 du compresseur à haute pression 2 par un arbre d'entraînement 16. La turbine à haute pression 5 présente des aubes fixes 17 et des aubes mobiles 18 montées sur la jante d'un disque 19 qui est entraîné en rotation par la détente des gaz chauds de combustion issus de la chambre de combustion 4.

Les aubes fixes 17 et mobiles 18 de la turbine à haute pression 5 sont refroidies par un air de refroidissement prélevé vers l'extérieur de la turbomachine 1 au niveau du compresseur à haute pression 2. Cet air de refroidissement est dirigé par un premier collecteur 20a vers un échangeur de chaleur 21 dans lequel circule un fluide froid, de préférence le combustible (hydrogène ou carburant). Après refroidissement dans l'échangeur 21, l'air refroidi retourne à la turbomachine par un deuxième collecteur 20b. L'air refroidi traverse au moins une entretoise creuse 22 dont est muni le carter diffuseur 3 et est dirigé pour sa plus grande partie P1 en aval, vers l'axe 8 de la turbomachine 1, par un collecteur annulaire 23 logeant dans l'espace annulaire délimité par l'arbre d'entraînement 16 et la paroi interne 12 de la chambre de combustion 4. L'autre partie P2 de l'air refroidi, destinée au refroidissement du dernier étage du compresseur à haute pression 2 est dirigée vers l'avant de la turbomachine 1 par des orifices 23a prévus dans la partie avant du collecteur annulaire 23.

Un compresseur axialo-centrifuge 24 est prévu entre l'extrémité arrière 25 du collecteur annulaire 23 et les aubes fixes 17 et mobiles 18 de la turbine à haute pression 5. Ce compresseur axialo-centrifuge 24 comporte, en amont, une pluralité d'étages axiaux 26, au nombre de quatre sur le dessin et, en aval, une roue centrifuge 27. Il reçoit l'air refroidi circulant dans le collecteur annulaire 23, et le recomprime. A la sortie de la roue centrifuge 27, l'air refroidi et recomprimé alimente, en air de refroidissement, les aubes fixes 17 par des orifices 28 via un collecteur 29, et les aubes mobiles 18 par les orifices 30.

Le compresseur axialo-centrifuge 24 comporte d'une part un carter extérieur 31 fixe relié à la paroi interne 12 de la chambre de combustion 4 par l'intermédiaire de la bride interne 32 située à l'arrière de la chambre de combustion 4, et solidaire de la paroi interne 12 de celle-ci, et, d'autre part, un rotor mobile 33 relié à l'arbre d'entraînement 16. Le carter externe 31 est du type à deux demi-coquilles pour faciliter le montage du compresseur axialo-centrifuge 24.

De façon avantageuse, le rotor mobile 33 fait partie intégrante de l'arbre d'entraînement 16. A cet effet, le rotor mobile 33 est fixé en amont à la partie arrière 34 de l'arbre d'entraînement 16 et en aval au disque 19 sur la jante duquel sont montées les aubes mobiles 18.

Le collecteur annulaire 23 est composé de deux viroles 35 et 36 de forme tronconique. La virole externe 35 est reliée, en amont, à la paroi interne 12 de la chambre de combustion 4 par fixation sur des brides internes 36 de liaison du carter diffuseur 3 et du carter de la chambre de combustion 4 et, en aval, à la partie avant 37 du carter extérieur 31 du compresseur axialo-centrifuge 24. La virole interne 36 est reliée en amont, avec la bride interne 38 de liaison du carter diffuseur 3 et du compresseur à haute pression 2. Cette bride interne 38 comporte les orifices 23a permettant à une partie de l'air de refroidissement de ventiler les aubes du compresseur à haute pression 2. La virole interne 36 est reliée à la virole externe 35 au voisinage du compresseur axialo-centrifuge 24 par des bras de liaison 39 disposés en regard des aubes du premier étage 26 du compresseur axialo-centrifuge 24. Un joint d'étanchéité 40 est prévu entre la virole interne 36 et l'arbre d'entraînement 16 près de l'extrémité arrière 25 du collecteur annulaire 23.

Le fonctionnement de la turbomachine se comprend aisément. Les gaz chauds circulant dans les aubes mobiles 18 de la turbine à haute pression 5 entraînent le disque 19 en rotation, lequel entraîne, à son tour, l'arbre d'entraînement 16 du compresseur à haute pression 2 et, par le fait, le rotor mobile 33 du compresseur axialo-centrifuge 24. L'air sous pression prélevé au niveau du compresseur à haute pression 2 et transitant par l'échangeur 21 où il est refroidi, via le premier collecteur 20a, subit une perte de charge importante dans l'échangeur 21. Il est de nouveau recomprimé par le compresseur axialo-centrifuge 24 entraîné par la turbine à haute pression 5 avant d'être envoyé vers les aubes fixes 17 et mobiles 18 de cette dernière. Ce procédé et ce dispositif permettent d'améliorer de façon appréciable la circulation de l'air de refroidissement, refroidi par l'échangeur 21, dans les aubes 17 et 18 et, ainsi, de diminuer la température de celles-ci, ou permettent d'augmenter la température des gaz chauds de combustion et, par le fait même, le rendement de la turbomachine 1, sans diminution de la durée de vie de la turbine à haute pression.

## Revendications

1. Turbomachine du type comportant
un compresseur à haute pression (2) servant à comprimer l'air circulant dans une veine annulaire (10) d'amont en aval dudit compresseur (2)
une chambre de combustion annulaire (4) disposée en aval dudit compresseur (2), délimitée du côté de l'axe (8) de ladite turbomachine par une paroi interne (12), recevant la plus grande partie de l'air comprimé par ledit compresseur (2) et destinée à produire des gaz de combustion à haute température par combustion d'un combustible,
une turbine à haute pression (5) disposée en aval de la chambre de combustion (4) et dans laquelle les gaz de combustion issus de la chambre de combustion (4) se détendent,
un arbre d'entraînement (16) reliant la partie rotative (15) de ladite turbine (5) à la partie rotative (7) dudit compresseur (2) et s'étendant dans l'axe (8) de ladite turbomachine (5), et
un dispositif de refroidissement par air de ladite turbine (5) comprenant
des moyens pour prélever une quantité d'air, dit air de refroidissement, dans ladite veine d'air (10) au voisinage dudit compresseur (2),
des moyens (21) pour refroidir ledit air de refroidissement prélevé, et
des moyens pour envoyer ledit air de refroidissement refroidi à ladite turbine (5),
caractérisée en ce que les moyens pour envoyer ledit air refroidi à la turbine (5) comportent un compresseur axialo-centrifuge (24) disposé entre le compresseur haute pression (2) et ladite turbine (5) dans l'espace annulaire délimité par la paroi interne (12) de la chambre de combustion (5) et l'arbre d'entraînement (16), ledit compresseur axialo-centrifuge (24) étant coaxial à ladite turbine (5) et entraîné par celle-ci pour recomprimer l'air de refroidissement refroidi par lesdits moyens de refroidissement (21) et à le centrifuger vers les aubes de ladite turbine (5), et comprenant un carter externe (31) fixe relié à la paroi interne (12) de la chambre de combustion (4) et un rotor mobile (33) relié à l'arbre d'entraînement (16) du compresseur à haute pression (2).

2. Turbomachine selon la revendication 1 caractérisée en ce que le compresseur axialo-centrifuge (24) comporte d'amont en aval une pluralité d'étages axiaux (26) et une roue centrifuge (27).

3. Turbomachine selon l'une quelconque des revendications 1 et 2, caractérisée en ce que le rotor mobile (33) constitue une partie de l'arbre d'entraînement (16) du compresseur à haute pression (2).

4. Turbomachine selon la revendication 3 caractérisée en ce que le rotor mobile (33) est fixé en amont à l'extrémité arrière (34) de l'arbre d'entraînement (16) et en aval à la partie rotative (19) de ladite turbine (5).

5. Turbomachine selon l'une quelconque des revendications 1 à 4, caractérisée en ce que les moyens pour envoyer ledit air refroidi à la turbine (5) comportent en plus un collecteur annulaire (23) disposé en amont du compresseur axialo-centrifuge (24) dans l'espace annulaire délimité par la paroi interne (12) de la chambre de combustion (4) et l'arbre d'entraînement (16), ledit collecteur annulaire (23) étant destiné à envoyer l'air refroidi issu des moyens de refroidissement (21) au compresseur axialo-centrifuge (24).

6. Turbomachine selon la revendication 5, caractérisée en ce que le collecteur annnulaire (23) comporte une virole externe (35) et une virole interne (36), ladite virole externe (35) étant reliée, en amont, à la paroi interne (12) de la chambre de combustion (2) et, en aval, au carter (31) du compresseur axialo-centrifuge (24), et ladite virole interne (36) étant reliée, en amont, au carter (6) du compresseur à haute pression (2) et, en aval, à ladite virole externe (35) par des bras de liaison (39).

7. Turbomachine selon la revendication 6 caractérisée en ce qu'un joint d'étanchéité (40) est prévu entre la virole interne (36) et l'arbre d'entraînement (16).

8. Turbomachine selon l'une quelconque des revendications 5 à 7, comportant un carter diffuseur (3), muni d'entretoises (22), entre le compresseur à haute pression (2) et la chambre de combustion (4) caractérisée en ce que les moyens (21) pour refroidir ledit air de refroidissement sont situés à l'extérieur de la turbomachine,
en ce qu'au moins l'une des entretoises (22) du carter diffuseur (3) est creuse et
en ce que l'air refroidi par lesdits moyens de refroidissement (21) retourne à la turbomachine par un collecteur extérieur (20b) puis traverse au moins une entretoise creuse (22) du carter diffuseur (3) pour arriver dans ledit collecteur annulaire (23).

9. Turbomachine selon l'une quelconque des revendications 1 à 8, caractérisée en ce que le carter externe fixe (31) du compresseur axialo-centrifuge (24) est du type à deux demi-coquilles.

10. Procédé pour refroidir la turbine à haute pression (5) d'une turbomachine comportant d'amont en aval un compresseur à haute pression (2) servant à comprimer de l'air, une chambre de combustion (4) et une turbine à haute pression (5),
selon lequel
on prélève une partie de l'air comprimé par le compresseur à haute pression (2),
on refroidit cet air prélevé par des moyens de refroidissement (21) et
on envoie l'air refroidi à la turbine (5),
procédé caractérisé en ce qu'on comprime l'air refroidi par les moyens de refroidissement (21) avant de l'envoyer à la turbine.

## Patentansprüche

1. Turbomaschine
mit einem Hochdruckverdichter (2) zum Komprimieren der Luft, die in einem ringförmigen Strömungskanal (10) von der stromaufwärtigen zur stromabwärtigen Seite des Verdichters (2) zirkuliert,
mit einer stromabwärts des Verdichters (2) angeordneten, auf der Seite der Achse (8) der Turbomaschine von einer inneren Wandung (12) begrenzten ringförmigen Brennkammer (4), die den größten Teil der von dem Verdichter (2) komprimierten Luft aufnimmt und dazu dient, durch Verbrennung eines Kraftstoffs Verbrennungsgase mit hoher Temperatur zu erzeugen,
mit einer stromabwärts der Brennkammer (4) angeordneten Hochdruckturbine (5), in der sich die von der Brennkammer (4) abgebenenen Verbrennungsgase entspannen,
mit einer Antriebswelle (16), die den drehenden Teil (15) der Turbine (5) mit dem drehenden Teil (7) des Verdichters (2) verbindet und in der Achse (8) der Turbomaschine (5) verläuft,
sowie mit einer Vorrichtung zur Kühlung der Turbine (5) mit Luft, die folgende Teile aufweist:
Mittel zum Entnehmen einer als Kühlluft bezeichneten Luftmenge in dem genannten Strömungskanal (10) in der Nähe des Verdichters (2),
Kühlmittel (21) zum Kühlen der entnommenen Kühlluft und
Mittel zum Transportieren der gekühlten Kühlluft zu der Turbine (5),
**dadurch gekennzeichnet,**
daß die Mittel zum Transportieren der gekühlten Luft zu der Turbine (5) einen Axial-Zentrifugal-Verdichter (24) umfassen, der zwischen dem Hochdruckverdichter (2) und der Turbine (5) in dem von den inneren Wandung (12) der Brennkammer (4) und der Antriebswelle (16) begrenzten ringförmigen Zwischenraum angeordnet ist,
daß dieser Axial-Zentrifugal-Verdichter (24), der koaxial zu der Turbine (5) angeordnet ist und von dieser angetrieben wird, um die von den genannten Kühlmitteln (21) gekühlte Kühlluft von neuem zu verdichten und zu den Schaufel der Turbine (5) zu zentrifugieren, ein mit der inneren Wandung (12) der Brennkammer (4) verbundenes festes äußeres Gehäuse sowie einen mit der Antriebswelle (16) des Hochdruckverdichters (2) verbundenen beweglichen Rotor (3) aufweist.

2. Turbomaschine nach Anspruch 1, dadurch gekennzeichnet, daß der Axial-Zentrifugal-Verdichter (24) von der stromaufwärtigen zur stromabwärtigen Seite eine Mehrzahl von axialen Stufen (26) sowie ein Zentrifugalrad (27) aufweist.

3. Turbomaschine nach einem der Ansprüche 1 und 2, dadurch gekennzeichnet, daß der bewegliche Rotor (33) einen Teil der Antriebswelle (16) des Hochdruckverdichters (2) bildet.

4. Turbomaschine nach Anspruch 3, dadurch gekennzeichnet, daß der bewegliche Rotor (33) auf der stromaufwärtigen Seite an dem hinteren Ende (24) der Antriebswelle (16) und auf der stromabwärtigen Seite an dem beweglichen Teil (19) der Turbine (5) befestigt ist.

5. Turbomaschine nach einem der Ansprüche 1 bis 4, dadurch gekennzeichnet, daß die Mittel zum Transportieren der gekühlten Luft zu der Turbine (5) einen ringförmigen Kollektor (23) umfassen, der stromäufwärts des Axial-Zentrifugal-Verdichters (24) in dem von der inneren Wandung (12) der Brennkammer (4) und der Antriebswelle (16) begrenzten ringförmigen Zwischenraum angeordnet ist und dazu dient, die von den Kühlmitteln (21) abgebene gekühlte Luft zu dem Axial-Zentrifugal-Verdichter (24) zu transportieren.

6. Turbomaschine nach Anspruch 5, dadurch gekennzeichnet, daß der ringförmige Kollektor (23) einen äußeren Mantelring (35) und einen inneren Mantelring (36) aufweist, wobei der äußere Mantelring (35) auf der stromaufwärtigen Seite mit der inneren Wandung (12) der Brennkammer (4) und auf der stromabwärtigen Seite mit dem Gehäuse (31) des Axial-Zentrifugal-Verdichters (24) verbunden ist, und wobei der innere Mantelring (36) auf der stromaufwärtigen Seite mit dem Gehäuse (6) des Hochdruckverdichters (2) und auf der stromabwärtigen Seite über Verbindungsarme (39) mit dem äußeren Mantelring (35) verbunden ist.

7. Turbomaschine nach Anspruch 6, dadurch gekennzeichnet, daß zwischen dem inneren Mantelring (36) und der Antriebswelle (16) eine Dichtung (40) vorgesehen ist.

8. Turbomaschine nach einem der Ansprüche 5 bis 7 mit einem zwischen dem Hochdruckverdichter (2) und der Brennkammer (4) angeordneten Diffusorgehäuse (3), das mit Abstandsstücken (22) ausgestattet ist,
dadurch gekennzeichnet,
daß die Kühlmittel (21) zum Kühlen der Kühlluft außerhalb der Turbomaschine angeordnet sind,
daß wenigstens eines der Abstandsstücke (22) des Diffusorgehäuses (3) hohl ist und daß die von den Kühlmitteln (21) gekühlte Luft über einen äußeren Kollektor (20b) zu der Turbomaschine zurückgeführt wird und dann wenigstens ein hohles Abstandsstück (22) des Diffusorgehäuses (3) durchläuft, um in den genannten ringförmigen Kollektor (23) zu gelangen.

9. Turbomaschine nach einem der Ansprüche 1 bis 8, dadurch gekennzeichnet, daß das feste äußere Gehäuse (31 ) des Axial-Zentrifugal-Verdichters (24) ein Zweischalen-Gehäuse ist.

10. Verfahren zum Kühlen des Hochdruckverdichters (5) einer Turbomaschine, die von der stromaufwärtigen zur stromabwärtigen Seite hin einen Verdichter (2) zum Komprimieren von Luft, eine Brennkammer (4) und eine Hochdruckturbine (5) aufweist,
wobei man
einen Teil der von dem Hochdruckverdichter (2) komprimierten Luft entnimmt
diese entnommene Luft durch Kühlmittel (21) kühlt und
die gekühlte Luft zu der Turbine (5) transportiert,
**dadurch gekennzeichnet,**
daß man die von den Kühlmitteln (21) gekühlte Luft komprimiert, bevor man sie zu der Turbine transportiert.

## Claims

1. Turboshaft engine of the type comprising
a high pressure compressor (2) serving to compress the air circulating in an annular duct (10) upstream and downstream of the said compressor (2),
an annular combustion chamber (4) arranged downstream of the said compressor (2), defined on the side of the axis (8) of the said turboshaft engine by an inner wall (12), receiving the greater part of the air compressed by the said compressor (2) and designed to produce combustion gases at a high temperature by the burning of a fuel,
a high pressure turbine (5) placed downstream of the combustion chamber (4) and in which the combustion gases coming from the combustion chamber (4) are expanded,
a drive shaft (16) connecting the rotating part (15) of the said turbine (5) to the rotating part (7) of the said compressor (2) and extending in the axis (8) of the said turboshaft engine (5), and,
a device for cooling by air the said turbine (5) comprising,
means for drawing off a quantity of air, called cooling air, from the said air duct (10) in the region of the compressor (2),
means (21) for cooling the said cooling air drawn off, and
means for directing the said cooled cooling air to the said turbine (5),
characterised in that the means for directing the said cooled air to the turbine (5) comprise an axio-centrifugal compressor (24) placed between the high pressure compressor (2) and the said turbine (5) in the annular space defined by the inner wall (12) of the combustion chamber (5 sic: = 4) and the drive shaft (16), the said axio-centrifugal compressor (24) being coaxial with the said turbine (5) and driven by this latter to recompress the cooling air cooled by the said cooling means (21) and to direct it by centrifugal force to the blades of the said turbine (5), and comprising an outer stationary casing (31) connected to the inner wall (12) of the combustion chamber (4) and a mobile rotor (33) connected to the drive shaft (16) of the high pressure compressor (2).

2. Turboshaft engine in accordance with Claim 1, characterised in that the axio-centrifugal compressor (24) comprises from upstream to downstream a plurality of axial stages (26) and a centrifugal disc (27).

3. Turboshaft engine in accordance with either of Claims 1 and 2, characterised in that the mobile rotor (33) constitutes a part of the drive shaft (16) of the high pressure compressor (2).

4. Turboshaft engine in accordance with Claim 3, characterised in that the mobile rotor (33) is fixed upstream to the rear end (34) of the drive shaft (16) and downstream, to the rotating part of the said turbine (5).

5. Turboshaft engine in accordance with any of Claims 1 to 4, characterised in that the means for directing the said cooled air to the turbine (5) comprise in addition an annular manifold (23) placed upstream of the said axio-centrifugal compressor (24) in the annular space defined by the inner wall (12) of the combustion chamber (4) and the drive shaft (16), the said annular manifold (23) being designed to direct the cooled air coming from the cooling means (21) to the axio-centrifugal compressor (24).

6. Turboshaft engine in accordance with Claim 5, characterised in that the annular manifold (23) comprises an outer shell (35) and an inner shell (36), the said outer shell (35) being connected, upstream, to the inner part (12) of the combustion chamber (2 sic. = 4) and, downstream, to the casing (31) of the axio-centrifugal compressor (24), and the said inner shell (36) being connected, upstream, to the casing (6) of the high pressure compressor (2) and, downstream, to the said outer shell (35) by connecting struts (39).

7. Turboshaft engine in accordance with Claim 6, characterised in that a sealing gasket (40) is provided between the inner shell (36) and the drive shaft (16).

8. Turboshaft engine in accordance with any of Claims 5 to 7, comprising a diffuser casing (3), fitted with spacers (22), between the high pressure turbine (2) and the combustion chamber (4), characterised in that the means (21) for cooling the said cooling air are situated on the outside of the turboshaft engine, in that at least one of the spacers (22) of the diffuser casing (3) is hollow and in that the air cooled by the said cooling means (21) returns to the turboshaft engine through an outer manifold (20a) then passes through at least one hollow spacer (22) of the diffuser casing (3) to arrive in the said annular manifold (23),

9. Turboshaft engine in accordance with any of Claims 1 to 8, characterised in that the stationary outer casing (31) of the axio-centrifugal compressor (24) is of the twin shell type.

10. Process for cooling the high pressure turbine (5) of a turboshaft engine comprising from upstream to downstream a high pressure compressor (2) serving to compress air, a combustion chamber (4) and a high pressure turbine (5), according to which a proportion of the air compressed by the high pressure compressor (2) is drawn off, this air drawn off is cooled by a cooling means (21) and the cooled air is directed to the turbine (5), process characterised in that the air cooled by the cooling means (21) is compressed before being directed to the turbine.
